# EUROPEAN PATENT SPECIFICATION

(11) **EP 2 352 391 B1**
(45) Date of publication and mention of the grant of the patent: **04.03.2015**
(21) Application number: 09756824.0
(22) Date of filing: 27.10.2009
(51) Int. Cl.: A23L 1/22, A23L 2/56, C12G 3/06, A23G 9/32

(54) **FLAVOURED EMULSION**
AROMATISIERTE EMULSION
ÉMULSION À SAVEUR

(30) Priority: 31.10.2008 EP 08168117
(43) Date of publication of application: 10.08.2011
(73) Proprietor: Firmenich S.A., 1211 Geneva 8 (CH)
(72) Inventor: STEINBOECK, Ernst, F-01170 Gex (FR); STOCKMAN, Katia, B-1400 Nivelles (BE)
(74) Representative: Dale, Gavin Christopher
(86) International application number: PCT/IB2009/054742
(87) International publication number: WO 2010/049884

(56) References cited:
- EP-A1- 0 139 545
- EP-A1- 1 541 715
- WO-A1-2008/148383
- WO-A2-2007/066233
- WO-A2-2008/014505
- FR-A3- 2 897 619
- US-A1- 2005 152 858
- US-A1- 2008 242 740
- ANONYMOUS: "Cinnamaldehyde" INTERNET ARTICLE, [Online] 12 May 2009 (2009-05-12), pages 1-7, XP002528199 Retrieved from the Internet: URL:http://sitem.herts.ac.uk/aeru/footprin t/en/Reports/1069.htm> [retrieved on 2009-05-15]
- SASOL: "Miglyol 810, 812, 818, 828, 840 Neutral Oils for Pharmaceuticals and Cosmetics" PRODUCT INFORMATION, September 2004 (2004-09), pages 1-7, XP002528200
- ANONYMOUS: "(E)-Anethol" INTERNET ARTICLE, [Online] 23 May 2009 (2009-05-23), pages 1-7, XP002529344 Retrieved from the Internet: URL:http://www.thegoodscentscompany.com/da ta/rw1001151.html> [retrieved on 2009-06-04]

## Description

### Technical field

The present invention relates to the flavours industry. More particularly, it relates to an oil-in-water emulsion comprising a stabilizing agent comprising an oil soluble flavouring compound and the use of such an emulsion in flavoured products. The invention also relates to methods for increasing the stability of an emulsion by use in the emulsion of a stabilizing agent comprising an oil soluble flavouring compound.

### Background and Prior Art

In the flavours industry, flavoured compositions and products often contain a wide array of flavouring compounds, many of which are incompatible with each other. If present in liquid form, these compounds are mixed and provided in the form of emulsions, typically oil-in-water macro-emulsions. Thus, emulsions are an important and frequently encountered form of product in this industry. However, the problem with emulsions and more specifically macro-emulsions is that, upon storage, they are unstable and tend to phase separate, i.e. the organic phase goes to the surface of the emulsion and sedimentation is observed, either at the bottom of the container, or in the form of a ring all around the container, at the top of the liquid. This is visually undesirable, especially to consumers of flavoured products such as beverages.

A number of compounds are known to be capable of stabilising oil-in-water emulsions. The prior art discloses a lot of surfactants of different natures, including for example gums, starches, resins, waxes and some proteins. Nevertheless, none of these prior art stabilizing agents can also be used as a flavouring compound. It follows that, in flavoured products, known stabilizing agents are always used in addition to the flavouring ingredients.

For example US 2002/00345775 describes flavouring oils wherein sucrose acetate isobutyrate (SAIB) has been added to improve the stability of the emulsion. This document also insists on the fact that a stabilizing agent must be colourless, odourless and tasteless, therefore clearly excluding flavours.

As another example, WO 96/00510 discloses the use of xanthan gum as a thickener to stabilise the oil phase of an oil-in-water emulsion in beverage fountain syrups. The emulsion disclosed in this prior art is very different from the one of the invention, because xanthan gum is not able to act as a flavouring agent and because the flavouring compounds used in the emulsions of the invention are able to stabilise the emulsion without inducing a change in the thickness of the emulsion.

The stabilizing agents of the prior art are disadvantageous in that they are present in the emulsion in addition to the flavouring compounds and to the specific components of the emulsion. This increases the number of ingredients that have to be added to an emulsion thereby increasing costs as well as increasing complexity since each ingredient of the emulsion must be compatible with every other one. The present invention seeks to address one or more of the abovementioned problems.

### Summary of the invention

Accordingly, the invention relates to an oil-in-water emulsion comprising
a) from 0.5 to 10% by weight of at least one flavouring compound having a logP comprised between 1 and 10 and a specific gravity comprised between 0.98 and 1.1;
b) from 0 to 25%, of a vegetable oil;
c) from 1 to 25% of an emulsifier;
d) from 50 to 95% of water;
all percentages being defined by weight relative to the total weight of the emulsion; and said flavouring compound being selected amongst diethyl succinate, isoamyl cinnamate and benzyl butyrate.

The invention further provides a flavoured product in the form of a beverage or a foodstuff selected from sweet or savory food product comprising an oil-in-water emulsion as defined above.

In another aspect, the invention provides a method for stabilizing an oil-in-water emulsion comprising adding to said emulsion from 0.5 to 10% of at least one flavouring compound having a logP comprised between 1 and 10 and a specific gravity comprised between 0.98 and 1.1, the percentages being defined by weight relative to the total weight of the emulsion, and said flavouring compound being being selected amongst diethyl succinate, isoamyl cinnamate and benzyl butyrate.

### Detailed Description

The present inventors have found that a specific class of flavouring compounds are also capable of acting as stabilizing agents in the emulsions of the invention. This is surprising and, to the best of our knowledge, unknown. When such a flavouring compound is used in an emulsion as a stabilizing agent, the emulsion of the invention is less subject to separation or sedimentation. The stability of the emulsion of the invention is even more surprising that it does not contain any weighting agent commonly used in the art.

The terms "flavouring compound" has the usual meaning in the art in that it is a compound that imparts a hedonic effect, i.e. is able to impart or modify in a pleasant way the taste of a preparation, and not just as imparting a taste.

The term "emulsion" means macro-emulsion. Oil-in-water macro-emulsions are dispersions of macroscopic droplets of oil in a continuous aqueous phase, which are thermodynamically unstable and tend to coalesce. This excludes micro-emulsions since these are inherently stable and so do not require the presence of such flavour compound stabilizing agents. Preferably, the term "emulsion" means a stabilized emulsion, i.e. an emulsion that has a further improved stability. In a preferred aspect of the invention, less than 1% by volume of the droplets is bigger than 1 µm, the percentage being relative to the total volume of the emulsion.

To be considered as a stabilizing agent for the purpose of the present invention, a flavouring compound must have a certain defined range of both solubility in oil and density. Thus, it is only a limited class of flavouring compounds that satisfy both of these criteria and are suitable for use in the present invention.

Oil soluble flavouring compounds are intended here as hydrophobic flavouring compounds that are not water-soluble and that do not generate water-soluble degradation products. The hydrophobicity of the flavouring compounds are defined by their logP value, which must be above 1. Below this logP, the flavouring would not be efficient, because it would not be dissolved in the oil phase. In a particular aspect of the invention, the logP value is comprised between 1 and 10.

In the context of the present invention, "logP" is defined as the logP as determined using the method described in the Official Journal of the European Communities, N° L 383 A/63, of 29.12.1992.

The density of the flavouring compound is defined by a specific gravity comprised between 0.98 and 1.15. It is preferable that the flavouring compound has a specific gravity comprised between 0.99 and 1.1, even more preferably between 1 and 1.1. If the flavouring compound has a specific gravity below 0.98, the emulsion is not stable because the oily phase is too light compared to the aqueous phase, thereby causing the separation of the emulsion, with the oil phase at the top. The specific gravity value of a particular ingredient is easily found in the literature. In particular the person skilled in the art is perfectly able to deduce the specific gravity value from the density of the ingredient, for example as indicated by the supplier of the ingredient or as measured using any usual methods known in the art.

Diethyl succinate, isoamyl cinnamate and benzyl butyrate have proved to be very efficient in stabilising the oil-in-water emulsion of the invention. The at least one flavouring compound is preferably diethyl succinate or benzyl butyrate, more preferably it is diethyl succinate.

The flavouring compound capable of stabilizing the emulsion, which is often volatile, can advantageously be encapsulated in order to limit its loss. Any encapsulation technique known in the art can be used to encapsulate these flavouring compounds, for example spray drying or extrusion.

The amount in which the flavouring compound is needed is highly dependent on the specific gravity that the oily phase would have without said flavouring compound. When the oily phase would already have a high specific gravity, less flavouring compound is needed compared to emulsions where the oily phase would have a relatively low specific gravity. Typically the amount in which the flavouring compound is present is comprised between 0.5 and 10%, preferably between 1 and 2%, more preferably between 1 and 1.5% by weight, relative to the total weight of the emulsion.

The oil-in-water emulsion of the invention comprises from 0 to 25% by weight, relative to the total weight of the emulsion, of a vegetable oil. Preferred amounts of vegetable oil can range between 0 and 20%, preferably between 0 and 15% or even between 0 and 10% by weight, relative to the total weight of the emulsion. For the purpose of the present invention, "vegetable oils" are intended here as esters of fatty acids with glycerol, from plant origin. Preferably said vegetable oil is mygliol.

The skilled person is able to select the suitable emulsifier according to the type of emulsion that is prepared and according to the intended use of said emulsion. The right emulsifier to use in a particular application can be determined by routine experimentation.

Typically, the emulsifier is present in an amount comprised between 1 and 25% by weight, relative to the total weight of the emulsion.

The oil-in-water emulsion of the invention may further comprise flavouring co-ingredients, which are flavouring compounds that do not have a specific gravity and a logP value comprised in the ranges described above. These flavouring co-ingredients are selected on the basis of the organoleptic effect that is desired. These flavouring co-ingredients can be advantageously encapsulated using any method known in the art, for example by spray drying or extrusion.

Optionally, the emulsions of the invention may also comprise flavour adjuvants. By "flavour adjuvant", it is meant an ingredient capable of imparting additional added benefit such as a colour, a particular light resistance, chemical stability, and so on. A detailed description of the nature and type of adjuvants commonly used in flavouring bases cannot be exhaustive, though such ingredients are well known to a person skilled in the art.

Other optional ingredients include organic solvents.

The optimal final density of the oil phase is function of the emulsifier used. For most emulsifiers, it is preferred to have a final density of the oil phase ranging from 0.94 to 1.1 g/cm³. For example, for arabic gum, the final density of the oil phase can vary within this whole range, whereas a narrower range comprised between 0.98 and 1 is preferred when pectin or modified food starch is used.

The emulsion of the invention can be prepared using any method known to the person skilled in the art for the preparation of oil-in-water emulsions, for example homogenization, high shear mixing or sonication.

The emulsion of the invention can be used in all types of flavoured products containing an emulsion, for example in a beverage or in a foodstuff such as a sweet or savoury product. It is particularly advantageous to use the emulsion of the invention in products such as an alcoholic drink, a soft drink, a juice or an ice cream. Within drinks, the preferred products according to the invention are alcoholic and non-alcoholic beers as well as wine derivative products. Alcoholic and non-alcoholic beers are especially preferred. As a "beer" we here intend to include all fermented products of malt.

The amount in which the oil-in-water emulsion of the invention can be added in the flavoured product of the invention varies within a wide range of values. These values are dependent on the nature of the article to be flavoured and on the desired organoleptic effect as well as the nature of the co-ingredients in a given base when the emulsion according to the invention is mixed with flavouring co-ingredients, solvents or additives commonly used in the art. The amount of the emulsion of the invention that is included in the final flavoured product depends essentially on the desired taste. Typical examples of these proportions are given below. In beers, the ranges are typically comprised between 0.1 and 10 g/l, preferably between 0.1 and 5 g/l, more preferably between 0.5 and 2 g/l and most preferably between 0.5 and 1.5 g/l.

In the flavoured products of the invention, the emulsion can be admixed with a flavour carrier. By "flavour carrier", it is meant a material that is substantially neutral in terms of flavour, such that it does not significantly alter the organoleptic properties of flavouring ingredients. The carrier may be a liquid or a solid.

Suitable liquid carriers include, for example, a solvent commonly used in flavours. Suitable solvents include, for example, propylene glycol, glycerin, triacetine, triethyl citrate, benzylic alcohol, ethanol, vegetal oils or terpenes. This list is non-exhaustive and the skilled person will readily understand that other solvents may be suitable for use in the present invention. As a particular example, one may cite alcoholic drinks, which intrinsically contain ethanol.

Suitable solid carriers include, for example, absorbing gums or polymers, or even encapsulating materials. Examples of such materials include wall-forming and plasticizing materials, such as mono, di- or trisaccharides, natural or modified starches, hydrocolloids, cellulose derivatives, polyvinyl acetates, polyvinylalcohols, proteins or pectins, or the materials cited in reference texts such as H. Scherz, Hydrokolloids : Stabilisatoren, Dickungs- und Geliermittel in Lebensmittel, Band 2 der Schriftenreihe Lebensmittelchemie, Lebensmittelqualität, Behr's Verlag GmbH & Co., Hamburg, 1996. Encapsulation is a well known process to a person skilled in the art, and may be performed, for instance, using techniques such as spray-drying, agglomeration and extrusion; or it may consist of a coating encapsulation, such as simple or complex coacervation techniques.

The flavoured product can also comprise a flavour base and/or a flavour adjuvant. A "flavour adjuvant is as defined above. By "flavour base", it is meant a composition comprising at least one flavouring co-ingredient, as defined above.

As already stated above, the emulsion of the invention is stabilised by the addition of a flavouring compound that is also a stabilizing agent, as described above. Therefore, a method for stabilizing an oil-in-water emulsion comprising using in the emulsion from 0.5 to 10%, preferably from 1 to 2%, more preferably from 1 to 1.5 of diethyl succinate, iso-amyl cinnamate or benzyl butyrate compound having a logP value comprised between 1 and 6 and a specific gravity comprised between 0.98 and 1.15, the percentages being defined by weight relative to the total weight of the emulsion, is also encompassed by the present invention. The oil soluble flavouring compound may also be as defined according to any of the preferred aspects of the invention, as described above in the part of the description dedicated to the emulsion itself.

The advantageous stabilizing effect of the flavouring compound used in the composition and method of the present invention is surprising because it is well known that flavouring compounds typically destabilize the emulsions in which they are added.

### Examples

### Example 1

### Oil-in-water emulsion according to the invention

An oil-in-water emulsion A comprised the following components:

**Table 1: Composition of oil-in-water emulsion A**

| **Ingredient** | **Parts by weight** |
|---|---|
| Diethyl succinate | 10.00 |
| Vegetable oil¹⁾ | 100.00 |
| Flavouring co-ingredients | 2.27 |
| Water | 274.74 |
| Arabic gum solution²⁾ | 600.00 |
| Antioxidant | 0.25 |
| Citric acid 50% H₂O | 10.00 |
| Sodium benzoate | 2.76 |
| **Total** | **1000.00** |

| | |
|---|---|
| 1) Miglyol special oil 812(K)G, origin: Stearineri 2) Emul+ Gum Base 25% W PB4422, origin: Kerry Ingredients | |

The emulsion of Table 1 was prepared as follows. First, diethyl succinate and the antioxidant were dissolved in miglyol. The flavour was then added to the solution to obtain Mix A. A second mixture (Mix B) was prepared by admixing water, sodium benzoate, Emul+ Gum Base PB4422 and citric acid 50% H₂O. Mix B was then stirred with a Turax mixer, while Mix A was added dropwise. After the addition of Mix A, stirring was continued for 15 minutes. The obtained emulsion was then homogenized by passing twice through a RANNIE (tradename) Homogenizer 3732-65 under a pressure of 250 bars.

The particle size was checked with the Optical Particle Sizer AccuSizer 780A PSS Nicomp to verify that less than 1 % by volume of the particles had a size larger than 1 µm.

### Example 2

### Oil-in-water emulsion according to the invention

An oil-in-water emulsion B comprised the following components:

**Table 2: Composition of oil-in-water emulsion B**

| **Ingredient** | **Parts by weight** |
|---|---|
| Diethyl succinate | 10.00 |
| Vegetable oil¹⁾ | 100.00 |
| Lemon flavour | 0.01 |
| Water | 285.20 |
| Arabic gum solution²⁾ | 600.00 |
| Antioxidant | 0.25 |
| Citric acid 50% H₂O | 3.00 |
| Sodium benzoate | 1.54 |
| **Total** | **1000.00** |

| | |
|---|---|
| 1) Miglyol special oil 812(K)G, origin: Stearineri 2) Emul+ Gum Base 25% W PB4422, origin: Kerry Ingredients | |

The emulsion of Table 2 was prepared according to the method described in Example 1.

### Example 3

### Oil-in-water emulsion according to the invention

An oil-in-water emulsion C comprised the following components:

**Table 3: Composition of oil-in-water emulsion C**

| **Ingredient** | **Parts by weight** |
|---|---|
| iso-amyl cinnamate | 20.00 |
| Vegetable oil¹⁾ | 100.00 |
| Lemon flavour | 0.01 |
| Water | 275.20 |
| Arabic gum solution²⁾ | 600.00 |
| Antioxidant | 0.25 |
| Citric acid 50% H₂O | 3.00 |
| Sodium benzoate | 1.54 |
| **Total** | **1000.00** |

| | |
|---|---|
| 1) Miglyol special oil 812(K)G, origin: Stearineri 2) Emul+ Gum Base 25% W PB4422, origin: Kerry Ingredients | |

The emulsion of Table 3 was prepared according to the method described in Example 1.

### Example 4

### Oil-in-water emulsion according to the invention

An oil-in-water emulsion D comprised the following components:

**Table 4: Composition of oil-in-water emulsion D**

| **Ingredient** | **Parts by weight** |
|---|---|
| Benzyl butyrate | 25.00 |
| Vegetable oil¹⁾ | 100.00 |
| Lemon flavour | 0.01 |
| Water | 270.20 |
| Arabic gum solution²⁾ | 600.00 |
| Antioxidant | 0.25 |
| Citric acid 50% H₂O | 3.00 |
| Sodium benzoate | 1.54 |
| **Total** | **1000.00** |

| | |
|---|---|
| 1) Miglyol special oil 812(K)G, origin: Stearineri 2) Emul+ Gum Base 25% W PB4422, origin: Kerry Ingredients | |

The emulsion of Table 4 was prepared according to the method described in Example 1.

### Example 5

### Oil-in-water emulsion according to the invention

An oil-in-water emulsion E comprised the following components:

**Table 5: Composition of oil-in-water emulsion E**

| **Ingredient** | **Parts by weight** |
|---|---|
| Iso-amyl cinnamate | 20.00 |
| Vegetable oil¹⁾ | 100.00 |
| Flavouring co-ingredients | 2.27 |
| Water | 264.72 |
| Arabic gum solution²⁾ | 600.00 |
| Antioxidant | 0.25 |
| Citric acid 50% H₂O | 10.00 |
| Sodium benzoate | 2.76 |
| **Total** | **1000.00** |

| | |
|---|---|
| 1) Miglyol special oil 812(K)G, origin: Stearineri 2) Emul+ Gum Base 25% W PB4422, origin: Kerry Ingredients | |

The emulsion of Table 5 was prepared according to the method described in Example 1.

### Example 6

### Stability and turbidity of a flavoured beer comprising the oil-in-water emulsion of the

### invention

Emulsions A to E, prepared in Examples 1 to 5, were each diluted at 10% by weight in water. Five beer samples were prepared by mixing a beer base comprising a caramel flavour with each of the five diluted emulsions. Samples A and E were prepared by mixing an amount of 13 g/L of the diluted emulsion with the beer base in a bottle. The bottle was closed with a capsule and shaken to mix the emulsion into the base. Sample B, C and D were prepared in the same way, but with an amount of 16 g/L of the diluted emulsion.

The beer samples so prepared were stored for three months at 20°C under ambient light. No sedimentation was observed at the bottom of the bottle, no ring was formed at the top and the emulsion did not separate.

## Claims

1. A flavoured product, in the form of a beverage or a foodstuff selected from a sweet or savoury food product, comprising an oil in water emulsion comprising
a) from 0.5 to 10% by weight of at least one flavouring compound having a logP comprised between 1 and 10 and a specific gravity comprised between 0.98 and 1.1;
b) from 0 to 25%, of a vegetable oil;
c) from 1 to 25% of an emulsifier;
d) from 50 to 95% of water;
all percentages being defined by weight relative to the total weight of the emulsion; and said flavouring compound being selected amongst diethyl succinate, isoamyl cinnamate and benzyl butyrate.

2. A flavoured product according to claim 1, **characterized in that** the flavouring compound is diethyl succinate or benzyl butyrate.

3. A flavoured product according to claim 1, **characterized in that** the flavouring compound is diethyl succinate.

4. A flavoured product according to any one of claims 1 to 3, in the form of an alcoholic drink, a soft drink, a juice or an ice cream.

5. A flavoured product according to claim 4, in the form of an alcoholic or non alcoholic beer or a wine derivative product.

6. A flavoured product according to claim 5, in the form of an alcoholic or non alcoholic beer.

7. A method for stabilizing an oil-in-water emulsion comprising adding to said emulsion from 0.5 to 10% of at least one flavouring compound having a logP comprised between 1 and 10 and a specific gravity comprised between 0.98 and 1.1, the percentages being defined by weight relative to the total weight of the emulsion, and said flavouring compound being being selected amongst diethyl succinate, isoamyl cinnamate and benzyl butyrate.

8. A method according to claim 8, **characterized in that** the flavouring compound is diethyl succinate.

9. A method according to claim 8, **characterized in that** the flavouring compound is isoamyl cinnamate.

10. A method according to claim 8, **characterized in that** the flavouring compound is benzyl butyrate.

## Patentansprüche

1. Aromatisiertes Produkt in der Form eines Getränks oder eines Nahrungsmittels, ausgewählt aus einem süßen oder herzhaften Nahrungsmittelprodukt, umfassend eine Öl-in-Wasser-Emulsion, umfassend
a) von 0,5 bis 10 Gew.-% von mindestens einer aromatisierenden Verbindung mit einem logP zwischen 1 und 10 und einer relativen Dichte zwischen 0,98 und 1,1;
b) von 0 bis 25% von einem Pflanzenöl;
c) von 1 bis 25% von einem Emulgator;
d) von 50 bis 95% Wasser;
wobei alle Prozentgehalte durch das Gewicht relativ zu dem Gesamtgewicht der Emulsion definiert sind; und wobei die aromatisierende Verbindung unter Diethylsuccinat, Isoamylcinnamat und Benzylbutyrat ausgewählt ist.

2. Aromatisiertes Produkt gemäß Anspruch 1, **dadurch gekennzeichnet, dass** die aromatisierende Verbindung Diethylsuccinat oder Benzylbutyrat ist.

3. Aromatisiertes Produkt gemäß Anspruch 1, **dadurch gekennzeichnet, dass** die aromatisierende Verbindung Diethylsuccinat ist.

4. Aromatisiertes Produkt gemäß einem der Ansprüche 1 bis 3 in der Form von einem alkoholischen Getränk, einem Softdrink, einem Saft oder einer Eiscreme.

5. Aromatisiertes Produkt gemäß Anspruch 4 in der Form von einem alkoholischen oder alkoholfreien Bier oder einem Weinderivat-Produkt.

6. Aromatisiertes Produkt gemäß Anspruch 5 in der Form von einem alkoholischen oder alkoholfreien Bier.

7. Verfahren zum Stabilisieren einer Öl-in-Wasser-Emulsion, umfassend Hinzufügen zu der Emulsion von 0,5 bis 10% von mindestens einer aromatisierenden Verbindung mit einem logP zwischen 1 und 10 und einer relativen Dichte zwischen 0,98 und 1,1, wobei die Prozentgehalte durch das Gewicht relativ zu dem Gesamtgewicht der Emulsion definiert sind und wobei die aromatisierende Verbindung unter Diethylsuccinat, Isoamylcinnamat und Benzylbutyrat ausgewählt ist.

8. Verfahren gemäß Anspruch 7, **dadurch gekennzeichnet, dass** die aromatisierende Verbindung Diethylsuccinat ist.

9. Verfahren gemäß Anspruch 8, **dadurch gekennzeichnet, dass** die aromatisierende Verbindung Isoamylcinnamat ist.

10. Verfahren gemäß Anspruch 8, **dadurch gekennzeichnet, dass** die aromatisierende Verbindung Benzylbutyrat ist.

## Revendications

1. Produit aromatisé, sous la forme d'une boisson ou d'une denrée alimentaire sélectionnée parmi un produit alimentaire sucré ou salé, comprenant une émulsion huile-dans-eau comprenant
a) de 0,5 à 10% en poids d'au moins un composé aromatisant ayant un logP compris entre 1 et 10 et une densité relative comprise entre 0,98 et 1,1;
b) de 0 à 25% d'une huile végétale;
c) de 1 à 25% d'un émulsifiant;
d) de 50 à 95% d'eau;
tous les pourcentages étant définis en poids par rapport au poids total de l'émulsion; et ledit composé aromatisant étant sélectionné parmi le succinate de diéthyle, le cinnamate d'isoamyle et le butyrate de benzyle.

2. Produit aromatisé selon la revendication 1, **caractérisé en ce que** le composé aromatisant est le succinate de diéthyle ou le butyrate de benzyle.

3. Produit aromatisé selon la revendication 1, **caractérisé en ce que** le composé aromatisant est le succinate de diéthyle.

4. Produit aromatisé selon l'une quelconque des revendications 1 à 3, sous la forme d'une boisson alcoolisée, d'une boisson gazeuse, d'un jus ou d'une glace.

5. Produit aromatisé selon la revendication 4, sous la forme d'une bière alcoolisée ou sans alcool ou d'un produit dérivé du vin.

6. Produit aromatisé selon la revendication 5, sous la forme d'une bière alcoolisée ou sans alcool.

7. Procédé pour stabiliser une émulsion huile-dans-eau comprenant l'ajout à ladite émulsion de 0,5 à 10% d'au moins un composé aromatisant ayant un logP compris entre 1 et 10 et une densité relative comprise entre 0,98 et 1,1, les pourcentages étant définis en poids par rapport au poids total de l'émulsion, et ledit composé aromatisant étant sélectionné parmi le succinate de diéthyle, le cinnamate d'isoamyle et le butyrate de benzyle.

8. Procédé selon la revendication 7, **caractérisé en ce que** le composé aromatisant est le succinate de diéthyle.

9. Procédé selon la revendication 8, **caractérisé en ce que** le composé aromatisant est le cinnamate d'isoamyle.

10. Procédé selon la revendication 8, **caractérisé en ce que** le composé aromatisant est le butyrate de benzyle.
